# EUROPEAN PATENT SPECIFICATION

(11) **EP 1 726 514 B1**
(45) Date of publication and mention of the grant of the patent: **29.04.2009**
(21) Application number: 06252744.5
(22) Date of filing: 26.05.2006
(51) Int. Cl.: B62D 25/08, B60S 1/04

(54) **Cowl top structure for vehicle**
Wasserkastenstruktur für ein Fahrzeug
Boite à eau pour véhicule

(30) Priority: 27.05.2005 JP 2005155034
(43) Date of publication of application: 29.11.2006
(73) Proprietor: HONDA MOTOR CO., LTD., Tokyo 107-8556 (JP)
(72) Inventor: Okoshi, Masahiko, Wako-shi Saitama-ken 351-0193 (JP)
(74) Representative: Piésold, Alexander James

(56) References cited:
- FR-A1- 2 723 051
- US-A- 5 553 912
- US-A- 5 797 159
- US-A1- 2004 124 669

## Description

The present invention relates to a cowl top structure for a vehicle for introducing the outside air into a vehicle compartment.

A cowl top is a cover member located above a dashboard for partitioning an engine room and a vehicle compartment, and the cowl top has an air introducing grille. There have been proposed cowl tops having various structures in the prior art. For example, Japanese Patent Laid-open No. 2003-175862 has proposed a sealing structure for a cowl top for a vehicle, wherein the cowl top is divided into two parts in the lateral direction of the vehicle, and the entry of water droplets into an engine room is prevented. Further, Japanese Patent Laid-open No. Hei 8-80869 has proposed a structure of a connected portion of a divided cowl top improved in water tightness of the cowl top divided into two parts.

Both of the two-part cowl tops described in Patent Documents 1 and 2 mentioned above have a shielding effect such that the entry of water droplets into the engine room can be prevented. However, in the case of performing the maintenance of parts located under the cowl top, e.g., engine parts or the like provided in the engine room, it is necessary to remove wiper arms and the whole cowl top from a vehicle body. Accordingly, much time is required for removal of the cowl top and remounting of the cowl top.

It is therefore an object of the present invention to provide a cowl top structure for a vehicle, wherein the maintenance of engine parts or the like can be performed by removing only a part of the cowl top without the need for removal of wiper arms.

FR-A1-2723051 discloses a cowl top structure as in the preamble of claim 1.

In accordance with an aspect of the present invention, there is provided a cowl top structure for a vehicle comprising:
a left side panel fixed to a vehicle body, said left side panel having a hole for insertion of a rotating shaft for a left wiper arm;
a right side panel fixed to said vehicle body, said right side panel having a hole for insertion of a rotating shaft for a right wiper arm; and
a central panel detachably mounted on said left and right side panels;
whereby the maintenance of parts located under said cowl top can be performed by removing said central panel;
   **characterized in that;**
said central panel has an inverted U-shaped cross-section and hooks integrally formed with the central panel in the vicinity of left and right ends of the central panel on the side of a vehicle compartment, each hook being extended in a direction away from a driver's seat, and
said left side panel and said right side panel each has a thin-walled portion extending in a direction towards the driver's seat and being engaged with the hook formed on the central panel.

According to the above structure, the maintenance of parts such as engine parts located under the cowl top can be performed by removing only the central panel without the need for removal of the wiper arms and the left and right side panels. Accordingly, the maintainability can be improved. Further, , possible floating of the central panel from the left and right side panels at each overlaid portion on the vehicle compartment side can be prevented, so that the forward visibility is not impaired by such floating of the cowl top.

Preferably, the central panel has a vertical wall having an air introducing grille on the side of a driver's seat in the vehicle, and a washer nozzle is provided inside of the central panel so as to open toward the air introducing grille.

According to this structure, the washer nozzle is concealed behind the air introducing grille to become inconspicuous, thereby improving the marketability.

Preferred embodiments of the invention will now be described by way of example only and with reference to the accompanying drawings in which:
FIG. 1 is a perspective view of a vehicle including the cowl top structure according to the present invention as viewed from the front side of the vehicle;
FIG. 2 is a schematic side view of FIG. 1;
FIG. 3 is a perspective view of a cowl top according to a preferred embodiment of the present invention;
FIG. 4 is a cross section taken along the line 4-4 in FIG. 3;
FIG. 5 is a perspective view of an overlaid portion of a central panel on a left side panel as viewed from the lower side thereof;
FIG. 6 is an enlarged perspective view of a part of the overlaid portion shown in FIG. 5 on the driver side;
FIG. 7 is a cross section taken along the line 7-7 in FIG. 6;
FIG. 8 is a bottom plan view of the cowl top, showing the back side thereof;
FIG. 9 is an enlarged perspective view of a part of the cowl top, showing a washer nozzle as viewed from the lower side of the cowl top;
FIG. 10 is an enlarged top plan view of the central panel at a portion where the washer nozzle shown in FIG. 9 is located so as to open toward an air introducing grille; and
FIG. 11 is a cross section taken along the line 11-11 in FIG. 8.

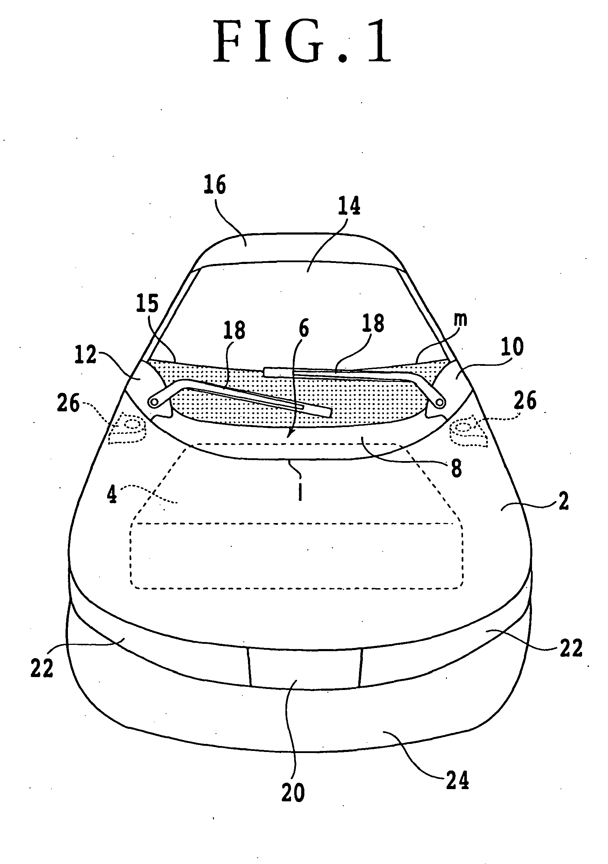

A preferred embodiment of the present invention will now be described in detail with reference to the attached drawings. In this description, it is assumed that the terms of "front", "rear", "left", "right", "upper", and "lower" are those as viewed from a driver in the vehicle. FIG. 1 is a perspective view of the vehicle including the cowl top structure according to the present invention. An engine and a transmission are mounted at a position shown by reference numeral 4 in an engine room covered with a bonnet (hood) 2. A cowl top 6 for introducing the outside air into a vehicle compartment is divided into a central panel 8, a left side panel 10, and a right side panel 12.

A black ceramic film 15 is attached to a windshield (front glass screen) 14 at a lower portion thereof. The vehicle further includes a roof 16, a pair of wiper arms 18, a front grille 20, headlights 22, and a front bumper 24. A pair of damper housings (strut towers) 26 for supporting dampers (struts) of front suspensions are provided in the engine room.

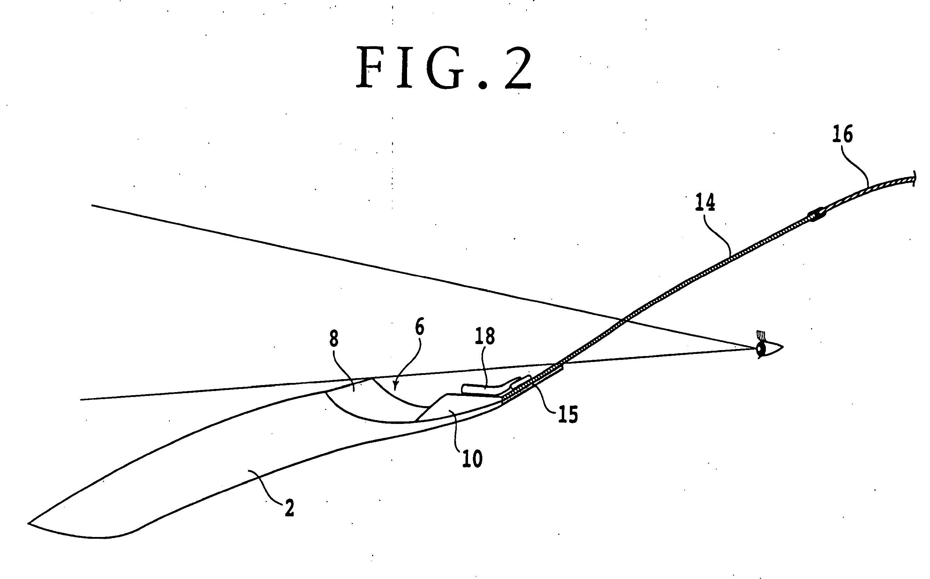

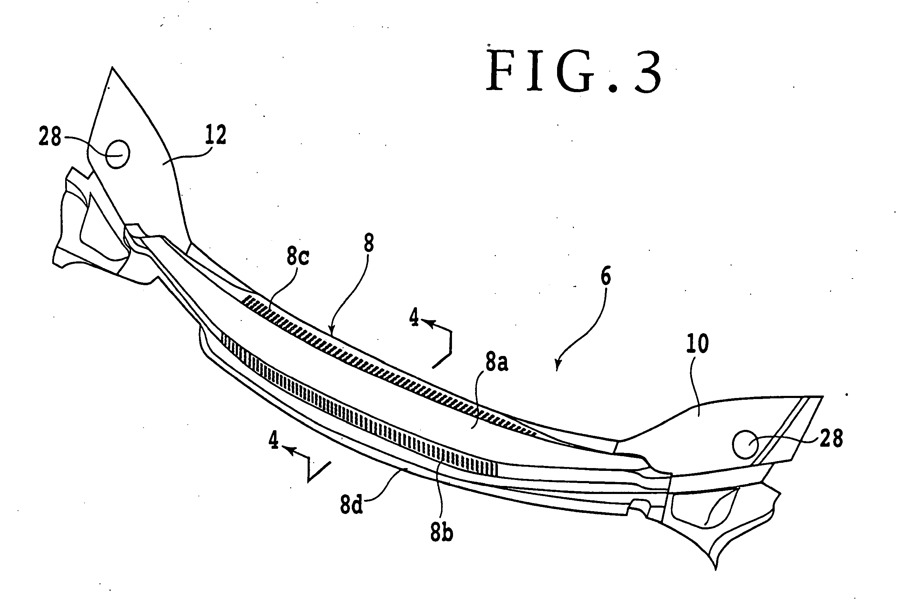

FIG. 2 is a schematic side view of FIG. 1, showing the structure that the upper surface of the central panel 8 of the cowl top 6 is substantially flush with the upper surface of the bonnet 2 at a central portion thereof. FIG. 3 is a perspective view of the cowl top 6 according to the preferred embodiment of the present invention. The cowl top 6 is divided into the central panel 8, the left side panel (left hinge cover) 10, and the right side panel (right hinge cover) 12. The left and right side panels 10 and 12 have holes 28 for insertion of rotating shafts for the respective wiper arms 18.

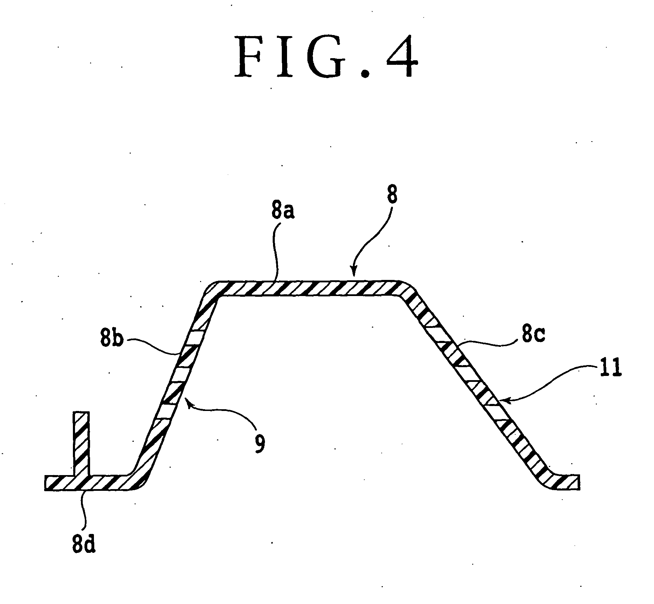

As shown in FIG. 4, the central panel 8 has a substantially inverted U-shaped cross section, and it has an upper wall 8a, a front wall 8b, a rear wall 8c on the driver side, and a mounting flange 8d. The central panel 8 is formed from a molded synthetic resin, and the left and right side panels 10 and 12 are also formed from a molded synthetic resin. As apparent from FIG 4, the front wall 8b is inclined to the front side with respect to the vertical direction, and the rear wall 8c is inclined to the rear side with respect to the vertical direction. The front wall 8b has an air introducing grille 9 defining a plurality of holes, and the rear wall 8c also has an air introducing grille 11 defining a plurality of holes.

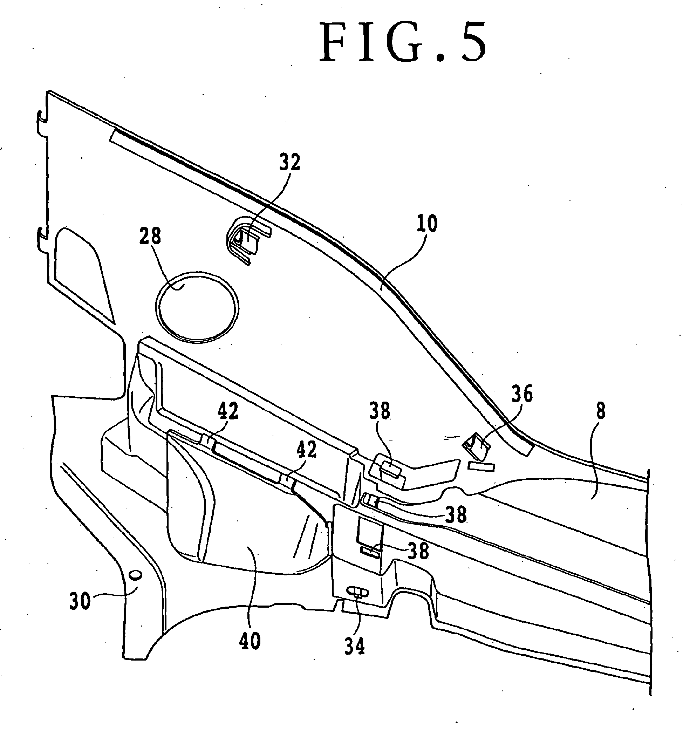

Referring to FIG 5, there is shown a perspective view of a connected portion between the left side panel 10 and the central panel 8 as viewed from the lower side thereof. The left side panel 10 is fastened at a fixing portion 30 to a left fender (not shown) by a clip, engaged with a windshield lower panel (not shown) by a clip 32, and fixed by a clip 34 to a damper base (not shown) mounted on the left damper housing 26. The central panel 8 is partially overlaid on the left side panel 10 and fixed to the left side panel 10 by three clips 38. Further, the central panel 8 is also fixed to both the left side panel 10 and the windshield lower panel by a clip 36. Reference numeral 40 denotes a lid for maintenance, which is detachably mounted to the left side panel 10 by hooks 42.

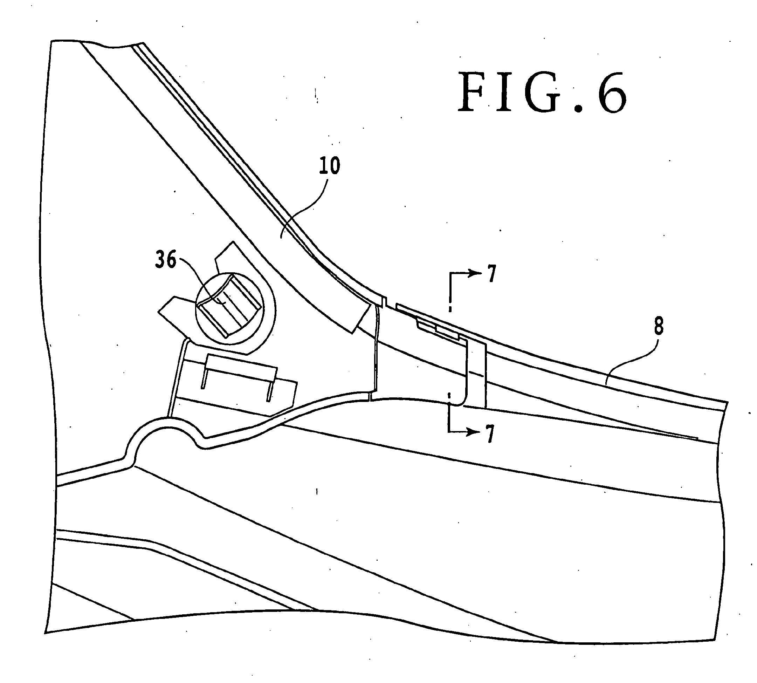

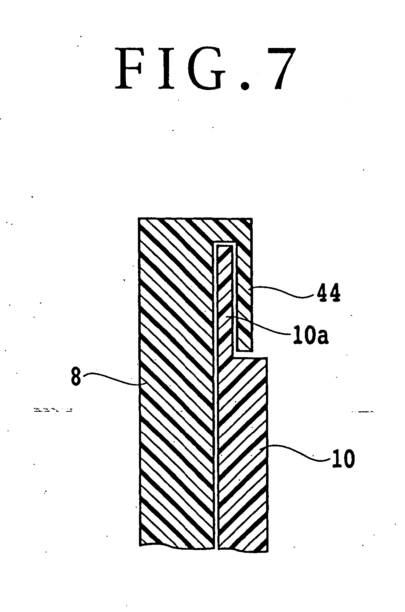

FIG. 6 is an enlarged perspective view of a part of the overlaid portion shown in FIG. 5 on the driver side, and FIG. 7 is a cross section taken along the line 7-7 in FIG. 6. As shown in FIG. 7, the central panel 8 is integrally formed with a hook 44, and the left side panel 10 is integrally formed with a thin-walled portion 10a for engaging the hook 44 of the central panel 8. The hook 44 of the central panel 8 is closely engaged with the thin-walled portion 10a of the left side panel 10, thereby preventing possible floating of the central panel 8 from the left side panel 10 at the overlaid portion. Although not shown, the overlaid portion of the central panel 8 on the right side panel 12 has a similar configuration.

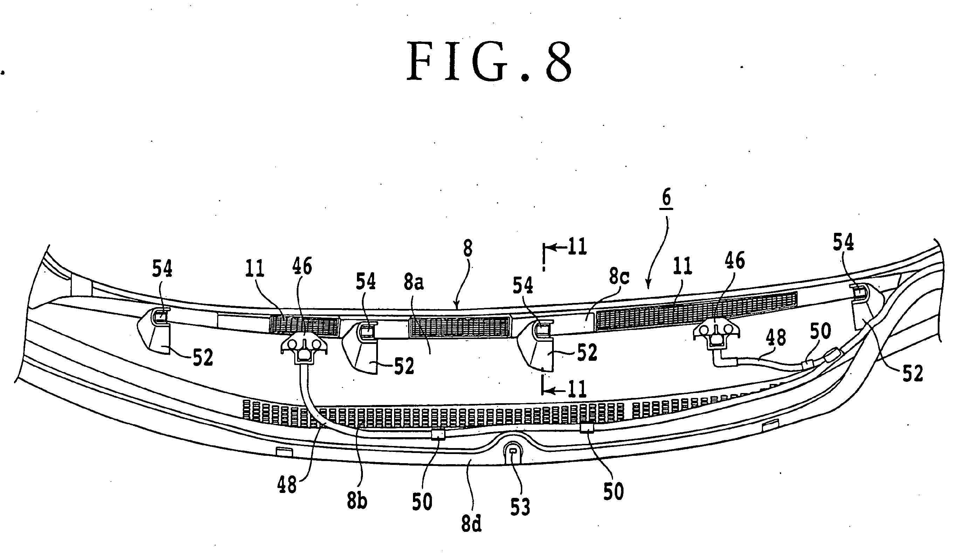

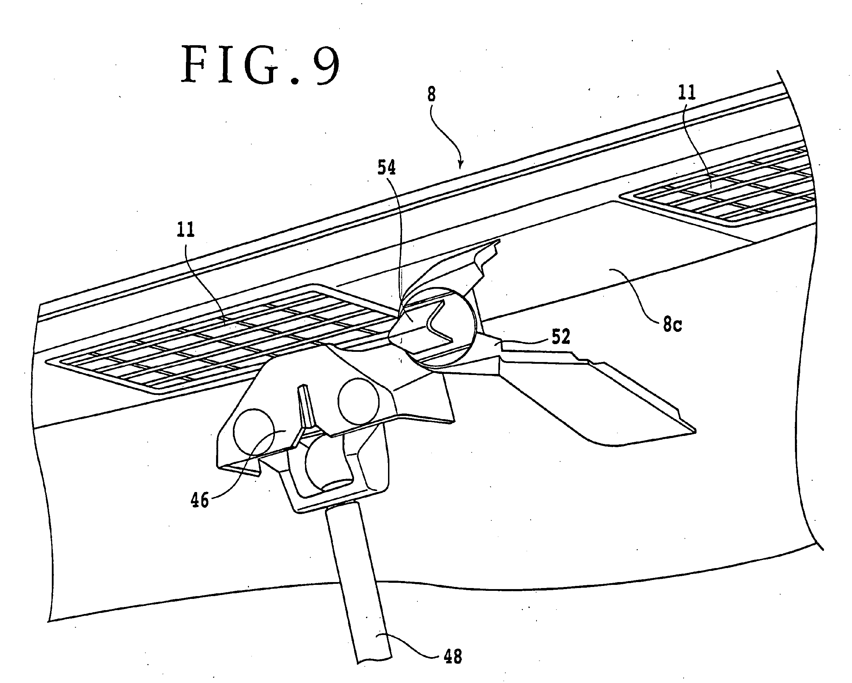

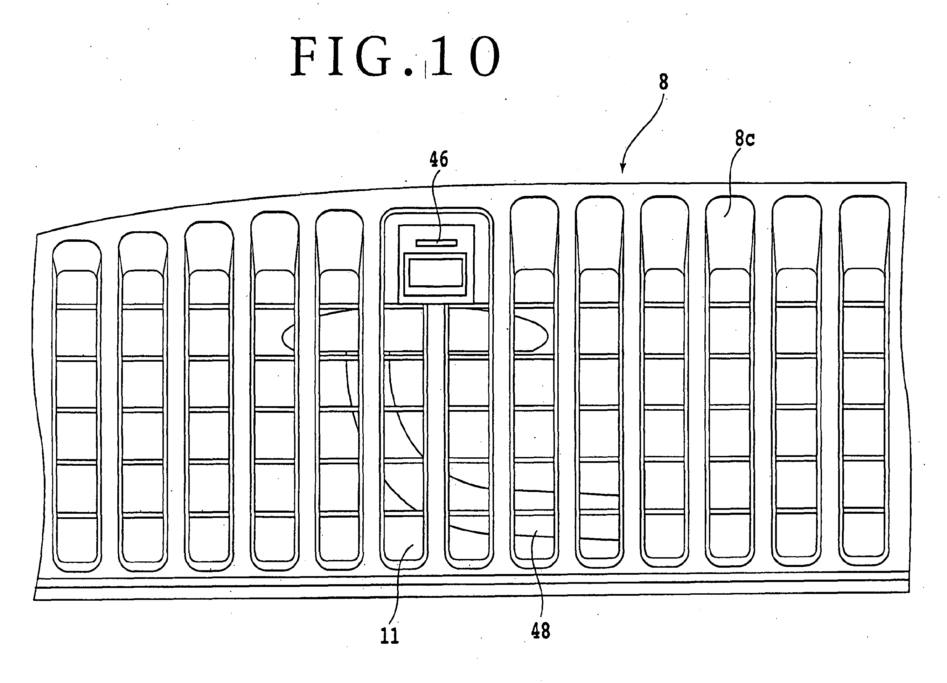

FIG. 8 is a bottom plan view of the cowl top 6, showing the back side thereof. As shown in FIG. 8, two washer nozzles 46 are provided inside of the central panel 8 of the cowl top 6 so as to open toward the air introducing grille 11 formed in the rear wall 8c of the central panel 8. The washer nozzles 46 are connected to rubber hoses 48, and the rubber hoses 48 are fixed to the central panel 8 by clips 50. FIG. 9 is an enlarged perspective view of one of the washer nozzles 46 and its peripheral portion, and FIG 10 is an enlarged top plan view of the central panel 8 at a portion where the washer nozzle 46 shown in FIG. 9 is located.

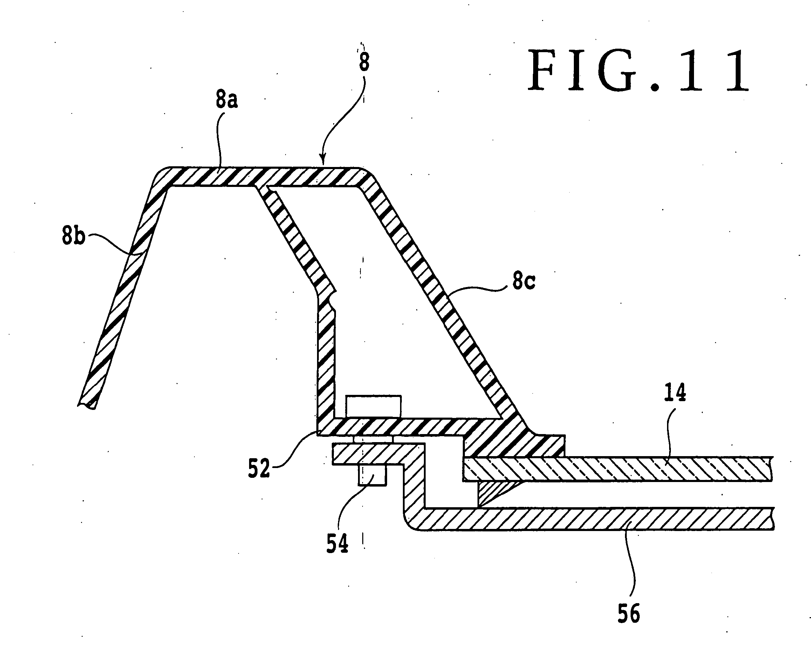

Referring again to FIG. 8, the central panel 8 of the cowl top 6 has four integrally-molded supports 52, and four clips 54 are fitted with the four supports 52, respectively. FIG. 11 is a cross section taken along the line 11-11 in FIG. 8. As shown in FIG. 8, each clip 54 fixed to the corresponding support 52 is engaged into a hole formed through a windshield lower panel 56, thereby fixing the central panel 8 to the windshield lower panel 56 on the driver side. The mounting flange 8d of the central panel 8 is formed with an engagement hole 53, and a clip is inserted in the engagement hole 53. This clip is engaged into an engagement hole formed through a dashboard upper (not shown), thereby fixing the central panel 8 at its front portion to the dashboard upper.

According to the configuration of the cowl top 6 mentioned above, the cowl top 6 is composed of three divided members, i.e., the central panel 8, the left side panel 10, and the right side panel 12. Accordingly, in performing the maintenance of parts such as engine parts located under the cowl top 6, the wiper arms 18 and the left and right side panels 10 and 12 need not be removed, but only the central panel 8 must be removed. As a result, the maintainability can be improved.

Further, since the washer nozzles 46 are provided inside of the cowl top 6, the washer nozzles 46 are concealed behind the air introducing grille 11 to become inconspicuous, thereby improving the marketability. Further, the overlaid portion of the central panel 8 on the left side panel 10 has a hook structure by the hook 44 on the driver side, and the overlaid portion of the central panel 8 on the right side panel 12 has a similar hook structure on the driver side. Accordingly, possible floating of the central panel 8 from the left and right side panels 10 and 12 at each overlaid portion on the driver side can be prevented to thereby improve the marketability.

As shown in FIG. 1, the front edge I of the central panel 8 has a radius of curvature smaller than that of the upper edge m of the black ceramic film 15. With this configuration, the front wall 8b and the rear wall 8c of the central panel 8 can be increased in height to thereby form sufficient air introducing holes without impairing the forward visibility.

The present invention is not limited to the details of the above described preferred embodiments. The scope of the invention is defined by the appended claims and all changes and modifications as fall within the scope of the claims are therefore to be embraced by the invention.

## Claims

1. A cowl top structure for a vehicle comprising:
a left side panel (10) fixed to a vehicle body, said left side panel (10) having a hole for insertion of a rotating shaft for a left wiper arm;
a right side panel (12) fixed to said vehicle body, said right side panel (12) having a hole for insertion of a rotating shaft for a right wiper arm; and
a central panel (8) detachably mounted on said left and right side panels (10, 12);
whereby the maintenance of parts located under said cowl top (6) can be performed by removing said central panel (8);
**characterized in that;**
said central panel (8) has an inverted U-shaped cross-section and hooks (44) integrally formed with the central panel (8) in the vicinity of left and right ends of the central panel (8) on the side of a vehicle compartment, each hook (44) being extended in a direction away from a driver's seat, and
said left side panel (10) and said right side panel (12) each has a thin-walled portion (10a) extending in a direction towards the driver's seat and being engaged with the hook (44) formed on the central panel (8).

2. A cowl top structure for a vehicle according to claim 1, wherein
said central panel (8) has a vertical wall (8c) having an air introducing grille (11) on the side of a driver's seat in said vehicle, and
a washer nozzle (46) is provided inside of said central panel (8) so as to open toward said air introducing grille (11).

## Patentansprüche

1. Motorhaubendeckelstruktur für ein Fahrzeug umfassend:
ein an einem Fahrzeugkörper befestigtes linkes Seitenpaneel (10), wobei das linke Seitenpaneel (10) eine Öffnung für das Einlegen eines Drehschafts für einen linken Wischerarm aufweist;
ein an dem Fahrzeugkörper befestigtes rechtes Seitenpaneel (12), wobei das rechte Seitenpaneel (12) eine Öffnung für das Einlegen eines Drehschafts für einen rechten Wischerarm aufweist; und
ein auf den linken und rechten Seitenpaneelen (10, 12) abnehmbar montiertes mittleres Paneel (8);
wodurch die Instandhaltung von unter dem Motorhaubendeckel (6) befindlichen Teilen durch Entfernen des mittleren Paneels (8) ausgeführt werden kann;
**dadurch gekennzeichnet,**
**dass** das mittlere Paneel (8) einen umgedrehten U-förmigen Querschnitt und Haken (44) aufweist, welche integral mit dem mittleren Paneel in der Nachbarschaft von linken und rechten Enden des mittleren Paneels (8) auf der Seite eines Fahrzeugraumes ausgebildet sind, wobei jeder Haken (44) sich in einer Richtung weg von einem Fahrersitz erstreckt, und
sowohl das linke Seitenpaneel (10) als auch das rechte Seitenpaneel (12) einen dünnwandigen Abschnitt (10a) aufweisen, der sich in einer Richtung auf den Fahrersitz zu erstreckt und mit dem auf dem mittleren Paneel (8) gebildeten Haken (44) im Eingriff steht.

2. Motorhaubendeckelstruktur für ein Fahrzeug nach Anspruch 1, wobei das mittlere Paneel (8) eine vertikale Wand (8c) aufweist, welche ein lufteinführendes Gitter (11) auf der Seite eines Fahrersitzes in dem Fahrzeug aufweist, und
eine Waschdüse (46) innerhalb des mittleren Paneels (8) vorgesehen ist, so dass diese sich zum lufteinführenden Gitter (11) hin öffnet.

## Revendications

1. Structure supérieure de capot pour un véhicule comprenant :
un panneau latéral gauche (10) fixé à une carrosserie de véhicule, ledit panneau latéral gauche (10) comportant un trou pour l'insertion d'un arbre rotatif pour un bras d'essuie-glace gauche ;
un panneau latéral droit (12) fixé à ladite carrosserie de véhicule, ledit panneau latéral droit (12) comportant un trou pour l'insertion d'un arbre rotatif pour un bras d'essuie-glace droit ; et
un panneau central (8) monté de manière détachable sur lesdits panneaux latéraux gauche et droit (10, 12) ;
moyennant quoi la maintenance des pièces situées au-dessous de ladite partie supérieure de capot (6) peut être effectuée en retirant ledit panneau central (8) ;
**caractérisée en ce que**
ledit panneau central (8) a une section en forme de U inversé et comporte des crochets (44) formés d'un seul tenant avec le panneau central (8) à proximité des extrémités gauche et droite du panneau central (8) du côté d'un habitacle de véhicule, chaque crochet (44) s'étendant dans une direction en éloignement d'un siège de conducteur, et
ledit panneau latéral gauche (10) et ledit panneau latéral droit (12) comportent chacun une partie à paroi mince (10a) s'étendant dans une direction vers le siège de conducteur et étant en prise avec le crochet (44) formé sur le panneau central (8).

2. Structure supérieure de capot pour un véhicule selon la revendication 1, dans laquelle
ledit panneau central (8) comporte une paroi verticale (8c) comportant une grille d'introduction d'air (11) du côté d'un siège de conducteur dans ledit véhicule, et
un gicleur de lave-glace (46) est prévu à l'intérieur dudit panneau central (8) de manière à s'ouvrir vers ladite grille d'introduction d'air (11).
